# EUROPEAN PATENT APPLICATION

(11) **EP 0 551 723 A1**
(43) Date of publication of application: **21.07.1993**
(21) Application number: 92310411.1
(22) Date of filing: 13.11.1992
(51) Int. Cl.: B29C 61/06, H02G 15/18

(54) **Article for sealing the end portion of a heat shrinkable sleeve**

(30) Priority: 20.11.1991 GB 9124625
(71) Applicant: N.V. RAYCHEM S.A., B-3010 Kessel-Lo (BE)
(72) Inventor: Bruyninckx, Francois, B-3390 Onze-Lieve-Vrouw-Tielt (BE); Nolf, Jean-Marie Etienne, B-3360 Korbeek-Lo (BE); Vanhentenrijk, Robert, B-3020 Winksele Herent (BE); Roosen, Dirk, B-3300 Tienen (BE)
(74) Representative: Benson, John Everett

(57) **Abstract**

A clip which comprises two outer legs and an inner leg, the legs being so arranged that the clip can be positioned on an open end of a shrinkable sleeve with the outer legs outside the sleeve and the inner leg inside the sleeve so as to form at least two terminal conduits; the inner leg comprising a support member with a sealing material (8) to which another sealing material (9A,9B) is removably attached or attachable thereto.

## Description

This invention relates to environmental sealing, particularly by means of a heat-shrinkable sleeve, of substrates such as telecommunications, power or other cables, particularly at cable splices. The invention is particularly useful for sealing multisheathed and/or sheathed and armoured cables.

Heat-shrinkable articles are now widely used in many areas where environmental sealing, for example, insulation, bonding or encapsulation, is required. Usually these articles dimensionally-recover on heating to a shape from which they have previously been deformed, but the term "heat-shrinkable" as used herein also includes an article which, on heating, adopts a new configuration, even if it has not previously been deformed.

In their most common form, such articles comprise heat-shrinkable sleeves made from polymeric material exhibiting the property of elastic or plastic memory as described, for example, in US 2027962, 3086242 and 3957372.

Heat-shrinkable sleeves find many applications, especially in the connection and termination of wires, cables and pipes. However, there are applications where it is desirable to provide a sealing member for elongate substrates such as cables or pipes or other supply lines whose ends are not accessible. For such applications so-called "wrap-around" sleeves have been developed. Basically, they are heat-shrinkable sheets which can be wrapped around a substrate to form a generally tubular shape and which, in general, are provided with fastening means for holding them in the wrapped-around configuration during heat-shrinkage. Examples of such sleeves are disclosed in GB1155470.

Heat-shrinkable sleeves have been successfully employed in many fields, but problems may arise when two or more substrates have to be sealed at one position. This problem, which is known as "branch-off", may occur, for example, at the outlet of a heat-shrinkable part. Amongst fields in which this problem is typically encountered there may especially be mentioned the outlets of the splice cases described and claimed in GB1431167 (Raychem), the disclosure of which is incorporated herein by reference.

A solution, to this problem of major commercial importance, is disclosed and claimed in US 4648924 (Raychem), the disclosure of which is incorporated herein by reference. In that patent, a method of forming a branch-off seal between a heat-shrinkable sleeve and at least two substrates, comprises the steps of:
(a) positioning the substrates within a heat-shrinkable sleeve;
(b) forming at least two heat-shrinkable terminal conduits by positioning a clip having at least two elongate legs over the outer surface of the heat-shrinkable sleeve at an open end thereof, wherein at least two of said legs are positioned externally of the sleeve and the substrates are within the terminal conduits; and
(c) while the clip remains on the outer surface of the heat-shrinkable sleeve, applying heat so as to effect shrinkage of the sleeve and to form the desired seal.

US 4400579 (Raychem) discloses and claims an assembly comprising a heat-shrinkable sleeve capable of being positioned around at least first and second elongate substrates, and a clip formed as a trident, the outer legs of which are capable of being positioned over the outer surface of the sleeve at the end thereof with the central leg of the trident (which may taper towards its proximal end and may be coated with an adhesive) inside the sleeve so as to form, and maintain during subsequent heat shrinkage of the sleeve, at least two terminal conduits respectively capable of receiving the first and second substrates.

Whilst the clips disclosed in these patents are outstandingly successful for most uses, some difficulties may be noticed under unfavourable conditions, for example, where cables of complex or unpredictable construction are to be sealed.

EP-B-0120603 (Raychem) discloses a clip for use with many small armoured cables. That clip comprises two outer legs, and an inner leg which has an aspect ratio of at least 4:1. The inner leg is coated with adhesive, and adhesives of different characteristics may be applied to different parts of the leg in order that appropriate adhesive contacts the armouring and the cable jacket.

PCT/GB90/01098 (Raychem) discloses a method of forming a branch-off seal between a heat-shrinkable sleeve and at least two spaced-apart elongate substrates, which comprises the steps of:
(a) positioning the substrates within the heat-shrinkable sleeve;
(b) positioning between the substrates and within the sleeve at an open end thereof, a plug having a larger cross-sectional size at a first position away from said open end and a smaller cross-sectional size at a second position towards said open end;
(c) positioning a heat activatable sealing material at the first position;
(d) forming and/or maintaining at least three heat-shrinkable conduits (preferably terminal conduits, although a middle conduit need not extend to the extreme end of the sleeve) in the sleeve by positioning one or more clips at the open end of the sleeve such that the substrates and the plug are in respective conduits; and
(e) while the clip remains on the sleeve applying heat so as to affect shrinkage of the sleeve, to activate the sealant, and form the desired seal.

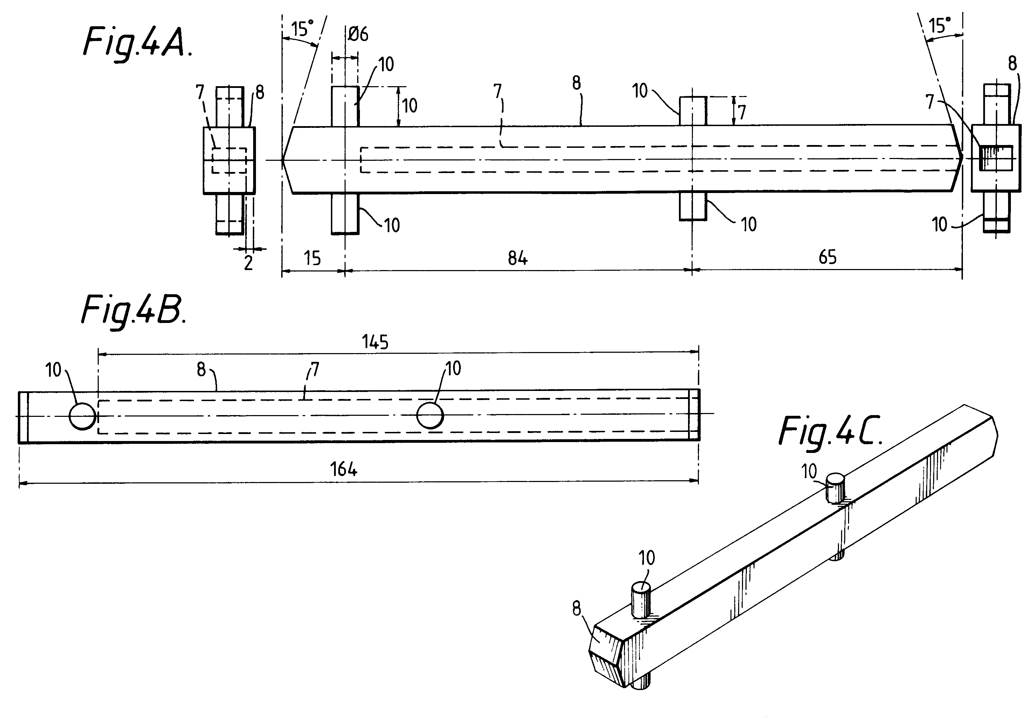

Attention is drawn to figure 4 of that PCT publication which discloses a modular plug in which a first part can be added to a second part to increase its diameter.

Other clips that may be mentioned are as follows. DE G8424167 (Philips), DE 3141336 (AEG), DE 3728638 (Stewing), DE 3815026 (RXS), DE 3815027 (RXS), DE 3822351 (RXS), DE 3822356 (RXS) and ZA 835243 (Sigmaform) disclose clips having moveable outer legs. DE 3148353 (Siemens) and DE 3430088 (Philips) disclose clips having removable legs. Also, EP 0265259 (ALH and Fujikura) discloses a heat-pipe having slabs of a polymeric material attached to a heat-conductive prong. The disclosure of each of these specifications, and of each of EP-B-0120603 and PCT/GB90/01098, is incorporated herein by reference.

In spite of this large number of clip designs, problems remain. Where cables are to be sealed having two or more jackets or other sheaths, or having armouring and one or more sheaths, it may be necessary to provide a large quantity of a sealing material, and it may be necessary to locate it at a certain distance from the end of the sleeve. Also, when the nature of the cables to be sealed cannot be predicted, or where unusual combinations of cable types are to be sealed, it may be desirable for a clip of the desired type to be made-up on site.

We have therefore now designed a clip whose configuration of sealing material can be altered at will.

Thus, this invention provides a clip which comprises two outer legs and an inner leg, the legs being so arranged that the clip can be positioned on an open end of a shrinkable sleeve with the outer legs outside the sleeve and the inner leg inside the sleeve so as to form at least two terminal conduits; the inner leg comprising a support member and a first sealing material removably attached or attachable thereto.

The invention also provides a kit-of-parts comprising the clip of the invention and a further first sealing material of different size from the first mentioned sealing material. A kit-of-parts is also provided comprising the clip of the invention (optionally also with the further first sealing material) and a heat-shrinkable wrap-around or tubular sleeve. Such a sleeve may be part of a larger article.

The invention still further provides a method of forming a branch-off seal between a heat-shrinkable sleeve and at least two substrates, which comprises the steps of:
(a) positioning the substrates within the heat-shrinkable sleeve,
(b) attaching a first sealing material to a support member thereby assembling a branch-off clip comprising two outer legs and an inner leg comprising the support member and the sealing material attached thereto,
(c) forming at least two terminal heat-shrinkable conduits by positioning the clip over the outer surface of the sleeve at an open end thereof, wherein the outer legs are positioned outside the sleeve and the inner leg is positioned inside the sleeve and the substrates are within the conduits, and
(d) while the clip remains on the sleeve applying heat so as to effect shrinkage of the sleeve and to form the desired seal.

The support member may be a solid, non-meltable, prong connected to the outer legs whose function is to locate the first sealing material within the sleeve between the cables or other substrates, and/or it may provide a heat-conductive path from the outer legs to that sealing material. The outer legs will in general be heated by a torch or hot air gun during heat-shrinkage of the sleeve. In many cases, however, we prefer that the support member comprise a second sealing material to which the first sealing material is removably attached or attachable. In this case the second sealing material may be provided on a support member, for example a support member as described above. It may be moulded or bonded to such a support member or otherwise attached in non-removable fashion. In this specification "removability" is to be construed bearing in mind what is practical on site, and excludes an operation such as complete melting that would at least temporarily destroy the sealing material. We prefer that removal of removable sealing material causes substantially no damage, and allows reattachment.

The support member is preferably integral with and/or substantially permanently attached to the outer legs. This can provide suitable heat conduction. The outer legs are preferably substantially equal in length to one another and preferably also to the inner leg, although the inner leg (or the support member thereof) may usefully be somewhat shorter. The outer legs and the support member will in general each be elongate, having for example a length at least 2.5, especially at least 3.5, more especially from 4.5 - 15 or more times their width. The outer legs will generally be thicker than the support member. We prefer that each of the outer legs and the support member is planar and that they lie in a common plane. This preference is to be construed in a practical manner, and geometrical exactness is not intended. For example the outer legs may partially be hollowed out on their opposing surfaces, and each of those legs and/or the support member may taper in thickness towards either end of the clip.

The sealing material, which preferably comprises a polyamide or other hot-melt adhesive may substantially alter the shape or appearance of the clip. In particular, the sealing material may increase the cross-sectional size (preferably in a direction perpendicular to a plane containing the outer legs and the support member) of the support member or other underlying sealing material. Such an increase in cross-sectional size need occur along part only of the length of the support member etc. In this way sealing material can be provided at the position desired according to the type of cables being sealed. For example an armoured cable will first be prepared by stripping back its outer jacket a certain distance, and its armouring a shorter distance, giving its end a stepped appearance. A greater amount of sealing material will be needed nearer the end of the cable (where both armouring and jacket are missing) than at a position further from that end (where only the jacket is missing).

The positions at which different quantities of adhesive are required may differ on each side of the clip if two (or more) different cables are being sealed at a branch-off point. It is desirable therefore that the first sealing material comprise first and second parts individually attached or attachable to the support member, preferably to opposing surfaces of the support member etc, and generally at opposite sides of the plane of the clip. These parts may be of different size and/or shape. Similar possibilities arise where the first sealing material is attached or attachable to a second sealing material. The sealing material preferably is in substantially sheet form and may have a width greater than the separation between the outer legs of the clip. In this case particularly it may be desirable that the sealing material be non-planar: a central part thereof being attached to the support member (or second sealing material) and edge portions extending from the central portion and obliquely away from it and away from each outer leg. This provides clearance between the outer legs and the sealing material for the sleeve.

Any suitable means may be provided for attaching the first sealing means to the support member, but we prefer that they have mutually cooperating recess and projection. The projection is preferably on the support member and the recess is preferably in the sealing material. They may be retained together by interference fit. We prefer that any connection means allows removal and attachment to be in a direction substantially perpendicular to a plane containing the outer legs and the support member.

Various kits-of-parts may be provided containing a clip of the invention and a heat-shrinkable sleeve and/or further first sealing material. For example several first sealing materials of different sizes and/or shapes may be provided so that the installer can select which are best for the job. They are preferably provided in pairs, at least one being provided on each side of the support member. More than one may be provided on either or each side of the support member: they can be provided end-to-end or on top of one another. An article may be provided to which a first sealing material can be attached to produce the clip the invention. Such article preferably has a support member comprising a sealing material having a recess and/or projection by means of which the sealing material can be attached to the support member, preferably in a direction substantially perpendicular to a plane containing the outer legs and the support member.

The invention is further illustrated by the accompanying drawings in which:
Figure 1 shows the use of a prior art branch-off clip;
Figure 2 shows the formation of a clip of the invention;
Figure 3 shows a first sealing means of a clip of the invention;
Figure 4 shows a support member or second sealing means of a clip of the invention;
Figure 5 shows cross-sections through a clip of the invention;
Figure 6 and 7 show cross-sections of clips of the invention in place between cables; and
Figures 8 and 9 show preferred clips of the invention.

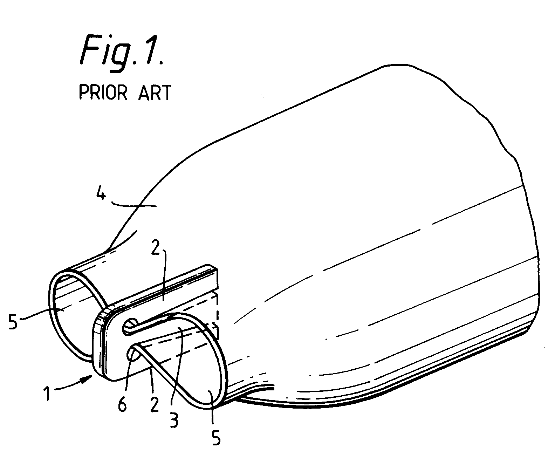

The prior art clip 1 of figure 1 has two outer legs 2 and an adhesive coated inner leg 3, and is positioned at an end of a heat-shrinkable ssleeve 4 to form two terminal conduits 5 within which two cables (not shown) can be positioned. Positioning of the clip causes deformation of the sleeve (which in the absnece of the clip had a single, larger, terminal conduit) to bring together circumferentially-spaced portions thereof at a position 6. This design of clip is disclosed in US 4400579, mentioned above.

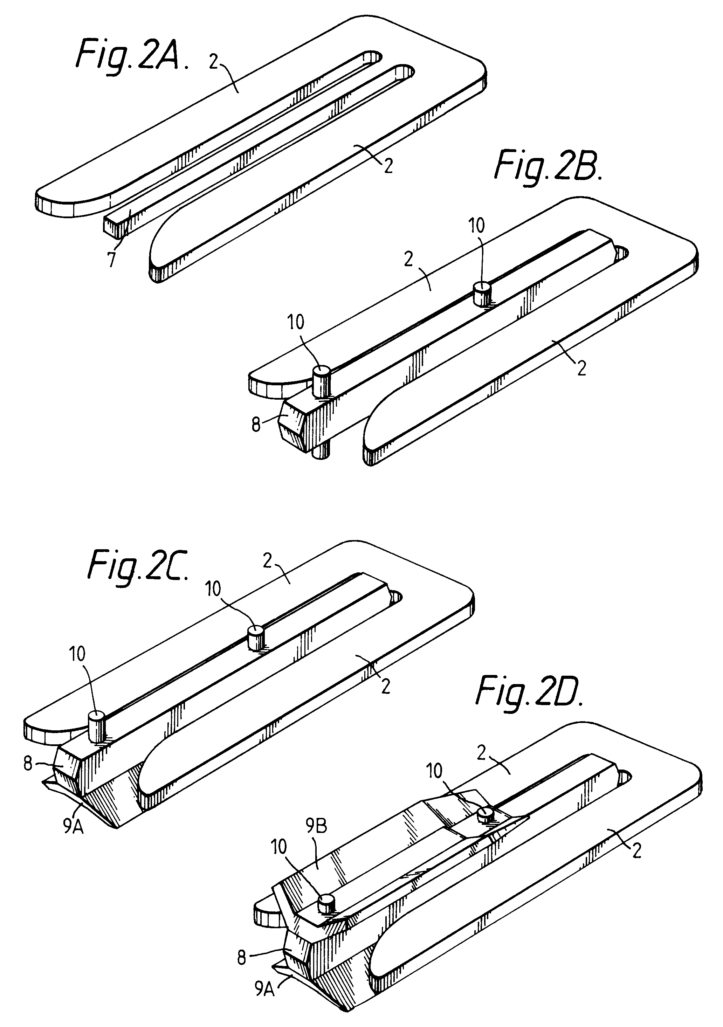

Figure 2A illustrates an article having two outer legs 2 and a support member 7 between them. Each of the outer legs 2 at the support member is elongate and they lie in a common plane.

They are integrally made of metal and the article therefore provides a heat-conductive path between the outer legs and any adhesive or other sealing material to be put onto the support member 7.

Such sealing material 8 (the second sealing material using the terminology above) is shown in position in figure 2B. It may be case in place, or bonded etc.

In figure 2C a so-called first sealing material 9A has been removably attached to the second sealing material 8. It has been attached by interference fit between projections 10 on material 9A.

In the embodiment of figure 2D the first sealing material 9 is in two parts 9A, 9B, one at each of two opposing surfaces of the material 8. Part 9B can be seen to extend only part way along the length of sealing material 8.

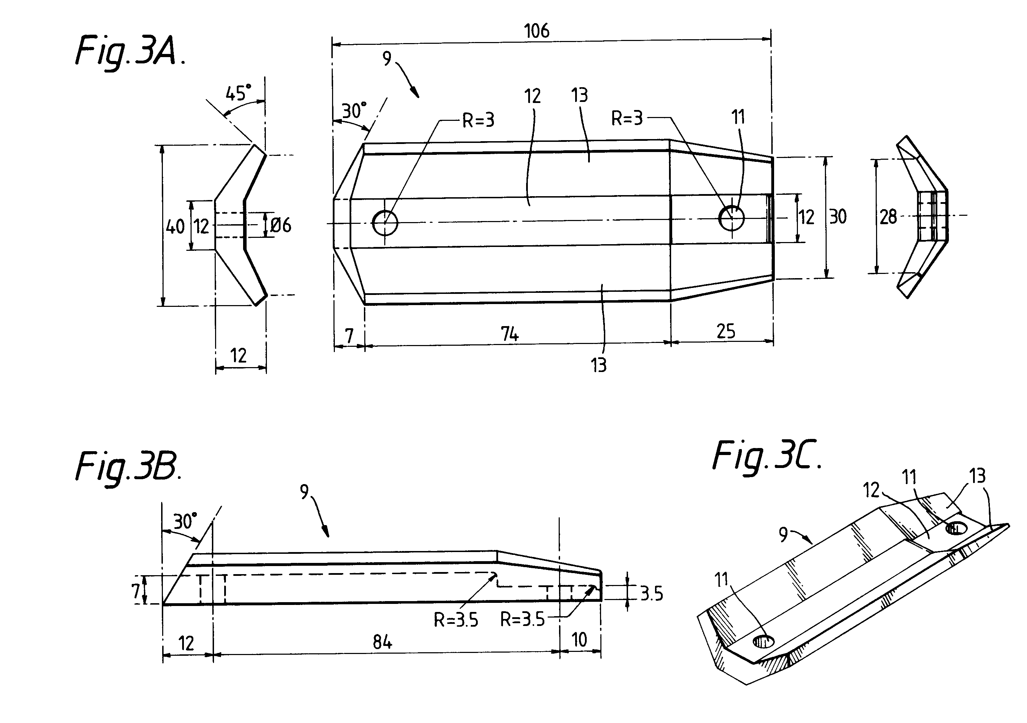

Figures 3A, 3B and 3C illustrate in more detail the first sealing material 9.

Figure 3A is a plan view with each end elevation, figure 3B is an edge elevation, and figure 3C is a perspective view.

The sealing material 9 can be seen to have holes or other recesses 11 that mate with the projections of the support member as shown at 10 in figure 2C.

A central portion 12 of the first sealing material 9 can abut the support member (7, or sealing material 8 thereof) and edge portions 13 extend obliquely away from a plane containing the outer legs 2 and the support member 7 etc.

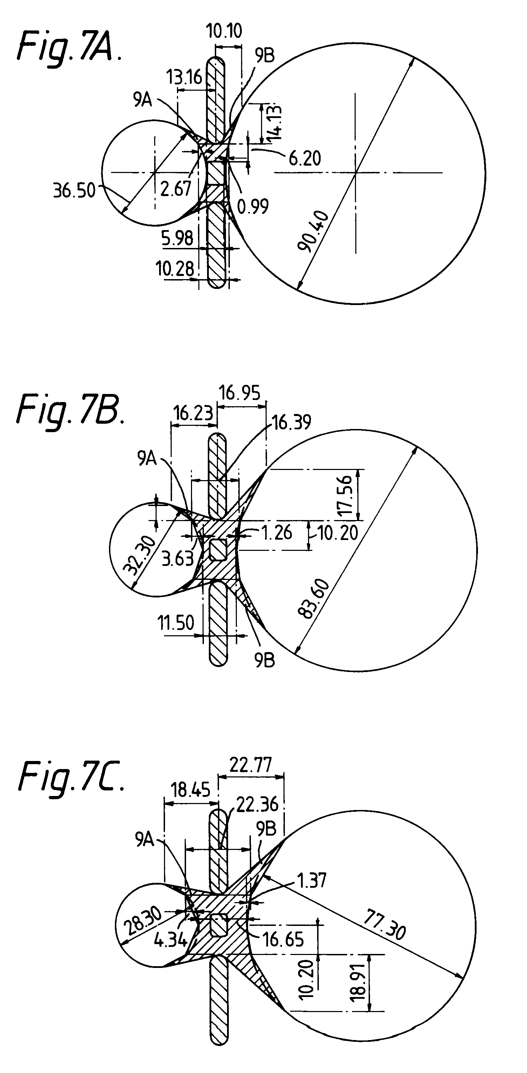

Preferred dimensions are given in millimetres. In general, any of the dimensions will be ±30%, especially ±20%, particularly ± 10% of those given. This applies also to figures 4 and 7.

A support member 7 and sealing material 8 thereof is shown in figures 4A, 4B and 4C.

Figure 4A is an edge elevation, together with end elevations. The support member 7 proper can be seen within the sealing material 8. Figure 4B is a plan view, and figure 4C is a perspective view.

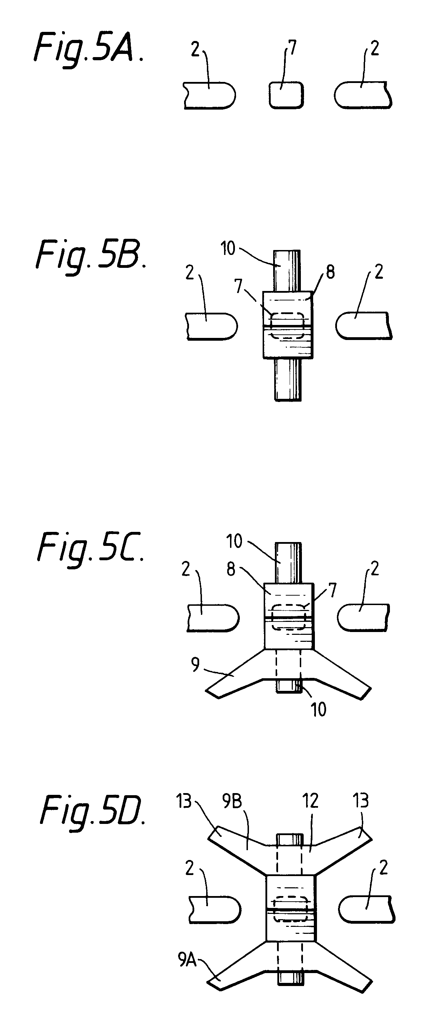

Partial cross-sections through a clip of the invention are shown in figures 5A, 5B, 5C and 5D. These views correspond to those of, respectively, figures 2A, 2B, 2C and 2D. The clip of figures 2B/5B could be used to seal branch-offs between single jacketed cables; that of figures 2C/5C for branch-offs between one single and one double or triple jacketed cable; and that of figures 2D/5D for branch-offs between two double or more preferably two triple jacketed cables.

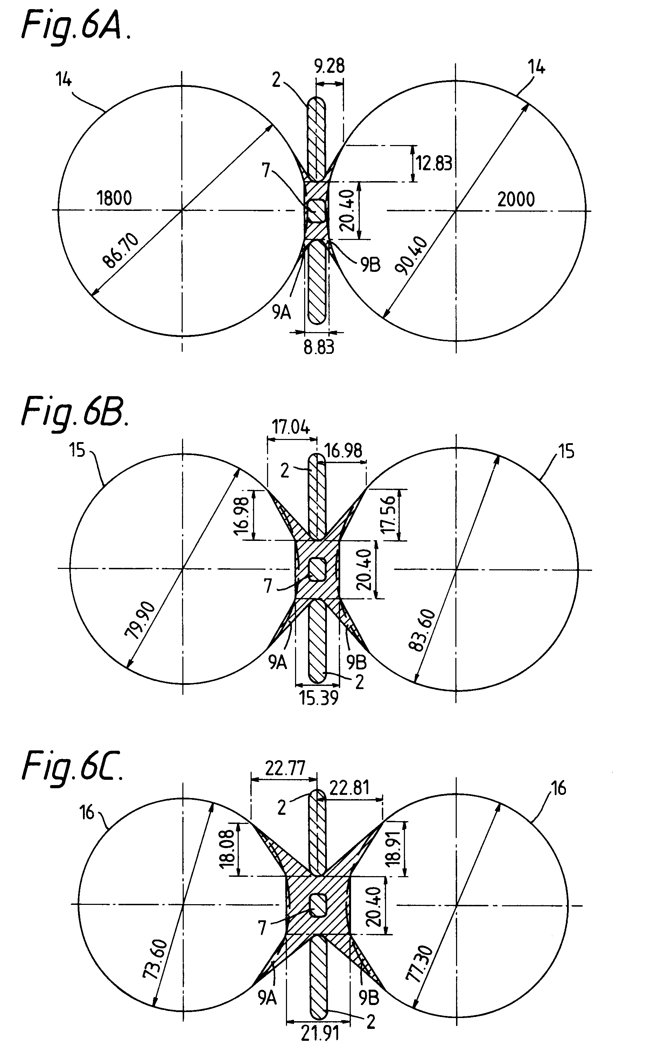

In figures 6A, 6B and 6C different adhesive profiles are used according to the type of cable, or to the position along a step-wise stripped cable at which the section is taken. Each figure is a cross-section through two side-by-side branching cables with a clip between them. The clip would cause a sleeve (not shown) to follow to some extent the contours of the two cables, ready for heat-shrinkage. For the relationship of the sleeve to the clip see figure 1.

Figures 6A, 6B and 6C may be regarded as three different cross-sections taken at different positions along branching cables. Figure 6A could therefore be a cross-section through the cables at a position where they are still intact, ie near the extreme end of the sleeve. Thus the outlines 16 represent outer cable jackets. Figure 6B is then a cross-section where an outer jacket only has been removed, and outlines 15 therefore represent the cable armouring which is thereby exposed. Finally figure 6C is a cross-section yet further into the cable splice where outer jacket and armouring have been removed, leaving exposed an inner jacket represented by outlines 16. The size of the first sealing material 9 can be seen to increase in passing from figure 6A to figure 6C, ie along the support member from its proximal to its distal end.

In figure 6A, 6B and 6C the two branching cables are of similar size, the right hand cable being just slightly larger than the left hand cable. As a result the two parts 9A, 9B of the first sealing material may be of substantially the same size. Figures 7A, 7B and 7C correspond to those of figures 6A, 6B and 6C but here the two branching cables are of significantly different size. As a result the two parts 9A, 9B are of very different size. This shows the flexibility of the present invention in allowing optimum sealing to be made for different cable types, different cables sizes, and different positions along the length of the cables.

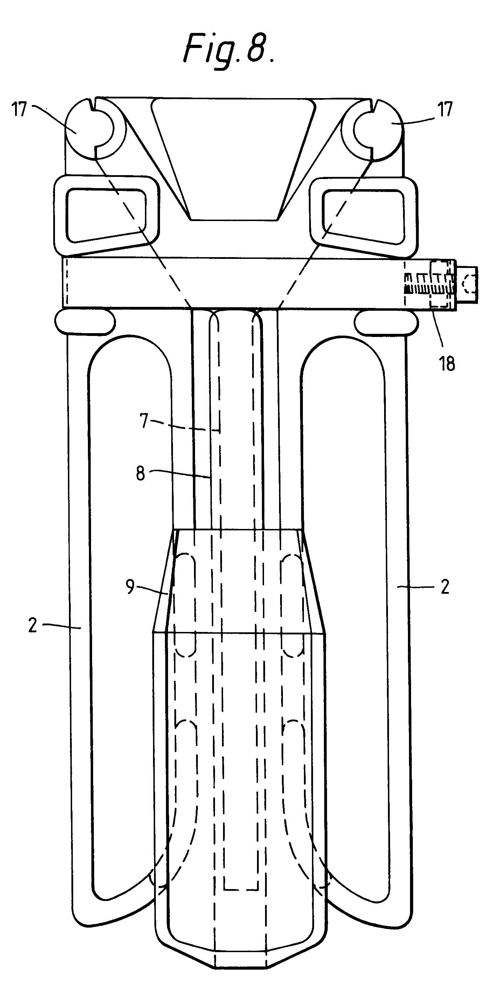

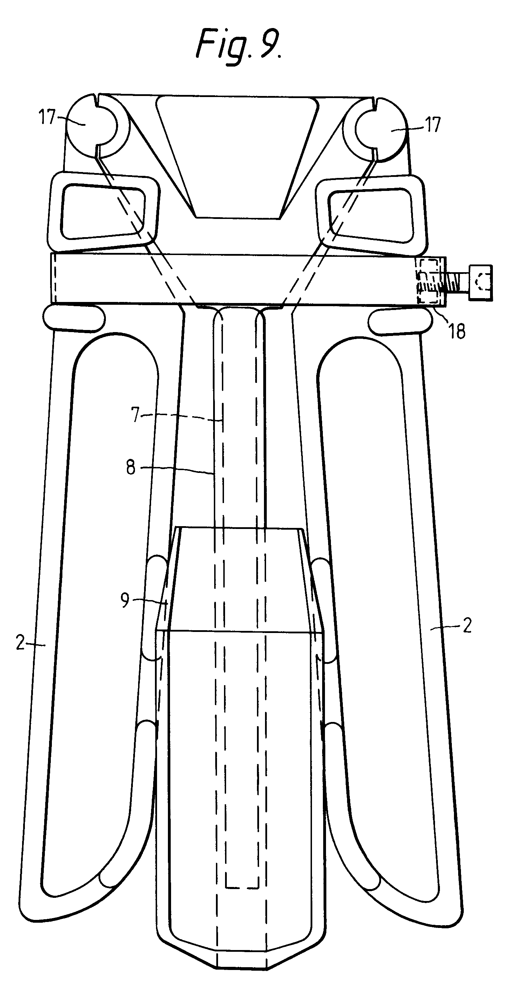

A particular design of clip is shown in figures 8 and 9. Here the outer legs 2 are moveable with respect to the support member 7, preferably by means of one or more hinges 17. Means 18 is provided to bring the outer legs together. This allows the legs to be opened to ease installation of the clip on the sleeve between the cables. This may be particularly beneficial with the clip of the invention due to the large volume of sealing material. Once the clip is in place the bolt or other means 18 can be tightened to close the legs 2. Alternatively closing could be done by hand etc. and a self-locking mechanism incorporated. Figure 8 shows the final configuration, and figure 9 shows the clip ready for insertion on the sleeve.

A part of the clip, for example the support means, may be hollow or otherwise comprise pressure access means such as a valve. Thus, a splice case could be pressurized or tested for pressure.

To conclude it is noted that the invention provides a clip, article for forming a clip, a kit and a method of branching or sealing, that is flexible in allowing tailoring to the particular cable size, type and configuration. Any one or more of the clips, sealing materials, or branching articles that are disclosed may be chosen. For example, the fully built-up clip may not be needed in all cases, and its components may be useful in themselves.

## Claims

1. A clip which comprises two outer legs and an inner leg, the legs being so arranged that the clip can be positioned on an open end of a shrinkable sleeve with the outer legs outside the sleeve and the inner leg inside the sleeve so as to form at least two terminal conduits; the inner leg comprising a support member and a first sealing material removably attached or attachable thereto.

2. A clip according to any preceding claim, in which the support member comprises a second sealing material to which the first sealing material is removably attached or attachable.

3. A clip according to claim 1 or 2, in which the support member is integral with and/or substantially permanently attached to the outer legs.

4. A clip according to claim 1, 2 or 3, in which the inner leg is substantially equal in length to each of the outer legs.

5. A clip according to any preceding claim, in which the first sealing material comprises a hot-melt adhesive.

6. A clip according to claim 2, in which attachment of the second sealing material increases the cross-sectional size of sealing material at the support member.

7. A clip according to claim 6, in which attachment of the second sealing material increases the cross-sectional size of sealing material along part only of the length of the first sealing material.

8. A clip according to claim 6 or 7, in which the increase is in a direction perpendicular to a plane containing the outer legs and the support member.

9. A clip according to any preceding claim, in which the first sealing material comprises first and second parts individually attached or attachable to the support member.

10. A clip according to claim 2, in which the first sealing material comprises first and second parts individually attached or attachable to the second sealing material.

11. A clip according to claim 9 or 10, in which the first and second parts are attached or attachable to opposing surfaces of the support member or second sealing material as the case may be.

12. A clip according to any preceding claim, in which the first sealing material has a width greater than a separation between the outer legs.

13. A clip according to any preceding claim, in which the first sealing material is attachable to or removable from the support member in a direction substantially perpendicular to a plane containing the outer legs and the support member.

14. A clip according to any preceding claim, in which the support member and the first sealing member have mutually cooperating recess and projection by means of which they are attached or attachable to one another.

15. A kit-of-parts comprising a clip according to any preceding claim, and a further first sealing material of different size from the first-mentioned first sealing material.

16. A kit-of-parts comprising a clip according to any of claims 1-14, and heat-shrinkable sleeve.

17. A method of forming a branch-off seal between a heat-shrinkable sleeve and at least two substrates, which comprises the steps of:
(a) positioning the substrates within the heat-shrinkable sleeve,
(b) attaching a first sealing material to a support member thereby assembling a branch-off clip comprising two outer legs and an inner leg comprising the support member and the sealing material attached thereto,
(c) forming at least two terminal heat-shrinkable conduits by positioning the clip over the outer surface of the sleeve at an open end thereof, wherein the outer legs are positioned outside the sleeve and the inner leg is positioned inside the sleeve and the substrates are within the conduits, and
(d) while the clip remains on the sleeve applying heat so as to effect shrinkage of the sleeve and to form the desired seal.

18. A method according to claim 17, in which the clip comprises a clip according to any of claims 2-14.

19. A method according to claim 17 or 18, in which the substrates comprise multisheathed and/or sheathed and armoured telecommunications or power cables.

20. An article adapted for forming a clip according to any of claims 1-14, which comprises two outer legs and a support member between them, the support member comprising a sealing material having a recess and/or projection by means of which further sealing material can be attached to the support member in a direction substantially perpendicular to a plane containing the outer legs and the support member.
